# EUROPÄISCHE PATENTSCHRIFT

(11) **EP 4 056 478 B1**
(45) Veröffentlichungstag und Bekanntmachung des Hinweises auf die Patenterteilung: **03.04.2024**
(21) Anmeldenummer: 22157774.5
(22) Anmeldetag: 21.02.2022
(51) Int. Cl.: B64D 37/30, B64C 5/06, B64C 5/02, B64C 3/34

(54) **STRÖMUNGSKÖRPER FÜR EIN LUFTFAHRZEUG MIT INTEGRIERTEM GASTANK**
AERODYNAMIC BODY FOR AN AIRCRAFT WITH INTEGRATED GAS TANK
CORPS D'ÉCOULEMENT POUR UN AÉRONEF À RÉSERVOIR DE GAZ INTÉGRÉ

(30) Priorität: 09.03.2021 DE 102021105609
(43) Veröffentlichungstag der Anmeldung: 14.09.2022
(73) Patentinhaber: Airbus Operations GmbH, 21129 Hamburg (DE)
(72) Erfinder: HECK, Christian, 21129 Hamburg (DE); INAMDAR, Shekhar, 21129 Hamburg (DE)
(74) Vertreter: LKGLOBAL Lorenz & Kopf Patentanwalt Attorney at Law PartG mbB

(56) Entgegenhaltungen:
- EP-A2- 2 639 152
- CN-B- 106 628 114
- US-A1- 2015 069 184
- US-A1- 2017 081 039

## Beschreibung

### TECHNISCHES GEBIET

Die Erfindung betrifft einen Strömungskörper für ein Luftfahrzeug und ein Luftfahrzeug mit mindestens einem derartigen Strömungskörper.

### HINTERGRUND DER ERFINDUNG

Zur Versorgung von Luftfahrzeugen mit elektrischer Leistung können Brennstoffzellen eingesetzt werden, die die Zufuhr eines Treibstoffs, insbesondere von Wasserstoff oder einem Wasserstoff aufweisenden Gas, benötigen. Der Treibstoff kann durch Reformierung aus einem anderen Treibstoff erzeugt oder aus einem Wasserstofftank bereitgestellt werden. Letzterer könnte zur Aufnahme von gasförmigem oder flüssigem Wasserstoff ausgebildet sein.

Aus DE 10 2011 116 841 A1 ist ein Luftfahrzeug bekannt, das eine Brennstoffzelle und ein Wasserelektrolysegerät aufweist. Weiter weist es einen röhrenförmigen gasdichten Flügelholm auf, in dem ein Sauerstofftank bzw. ein Wasserstofftank angeordnet sind und der in gefülltem Zustand eine zusätzliche Versteifung des Tragflügels in Spannweitenrichtung bildet. Der Flügelholm kann ein Innenrohr aufweisen, das einen Innendruck des Wasserstoffs bzw. Sauerstoffs sowie auf den Flächenanteil am Holm entfallende Zug- und Druckkräfte aus dem Flügelbiegemoment und den Flügeldruckkräften aufnimmt.

DE 10 2019 126 287 B3 offenbart einen Fluidtank zur Integration in eine Struktur eines unbemannten Fluggeräts, aufweisend eine Hülle mit einer ersten Axialwandung, einer entgegengesetzt angeordneten zweiten Axialwandung, einer Oberseite, einer Unterseite und einem umschlossenen Innenraum, mindestens eine Aufnahmekammer in dem Innenraum zum Lagern von Fluid, und eine an der Unterseite angeordnete Sammelkammer, die mit der mindestens einen Aufnahmekammer in Fluidverbindung steht, wobei die Sammelkammer eine Bodenfläche aufweist, durch die sich ein Ablauf erstreckt, und wobei eine Deckfläche oberhalb der Bodenfläche angeordnet ist und zumindest einen Abschnitt der Sammelkammer überdeckt.

US 2015/069184 A1 offenbart Tanks für kryogene Brennstoffe zur Verwendung in Flugzeugstrukturen, beispielsweise einer tragflächenförmigen Struktur, die außerhalb eines Flugzeugrumpfes angeordnet ist.

### ZUSAMMENFASSUNG DER ERFINDUNG

Aufgabe der Erfindung ist es, eine alternative Vorrichtung zum Mitführen von Treibstoff und insbesondere Wasserstoff in einem Luftfahrzeug bereitzustellen.

Die Aufgabe wird gelöst durch einen Strömungskörper für ein Luftfahrzeug mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Strömungskörper für ein Luftfahrzeug vorgeschlagen, aufweisend einen Torsionskasten mit mehreren Holmen und mindestens zwei Hautabschnitten zum Umhüllen der Holme, wobei in dem Torsionskasten mindestens eine Innenzelle ausgebildet ist. Es ist vorgesehen, dass in der mindestens einen Innenzelle ein Gastank mit einer Gastankhülle angeordnet ist, und dass der Gastank Befestigungselemente aufweist, die mit Halteelementen in der betreffenden Innenzelle gekoppelt sind, um den Gastank derart zu haltern, dass die Gastankhülle in einem Abstand zu den Holmen und den Hautabschnitten gelagert und in drei Raumrichtungen gestützt ist.

Der Torsionskasten ist eine kastenförmige, weitgehend hohle Struktur, welche eine Kernkomponente des Strömungskörpers darstellen kann. Der Torsionskasten wird beim Betrieb des Strömungskörpers insbesondere auf Torsion und Biegung belastet und kann besonders bevorzugt mehrere, d.h. mindestens zwei, Holme aufweisen. Es sind dabei insbesondere Vielholmer-Gestaltungen vorteilhaft. Zwischen den Holmen, die voneinander beanstandet sind, könnten gegebenenfalls mehrere Rippen angeordnet sein. Dadurch kann sich eine lamellen- oder gitterförmige Struktur ergeben, welche von den Hautabschnitten umhüllt wird. Die Holme, Rippen und Hautabschnitte sind aneinander befestigt, sodass der Torsionskasten eine besonders große Steifigkeit aufweist. Ein solcher Torsionskasten ist beispielsweise als Flügelkasten bekannt, der auch in Seitenleitwerken, Höhenleitwerken, Winglets, Vorflügeln und anderen Elementen vorhanden sein kann.

Aufgrund der genannten, kastenförmigen Struktur, die aus voneinander beabstandeten Versteifungselementen besteht, sind einzelne Innenzellen in dem Torsionskasten gebildet. Erfindungsgemäß ist in mindestens einer solchen Innenzelle ein Gastank mit einer Gastankhülle angeordnet und dazu ausgebildet, ein Gas aufzunehmen und bei Bedarf wieder abzugeben. Die Größe und Gestalt der einzelnen Innenzellen folgt der Konstruktion des Torsionskastens, der primär zum Erreichen einer gewünschten, aerodynamisch Oberfläche gestaltet ist. Die Innenzelle, d.h. der Hohlraum an sich, erfüllt oftmals keine weiteren Aufgaben. In Seitenleitwerken könnten Aktuatoren, elektrische Leitungen, Fluidleitungen oder Wellen durch Innenzellen verlaufen. Erfindungsgemäß wird nun zumindest eine dieser hohlen Innenzellen mit einem Gastank ausgestattet, sodass eine besonders gute Ausnutzung des zur Verfügung stehenden Bauraums innerhalb des Strömungskörpers und des Luftfahrzeugs erfolgt.

Um zu verhindern, dass der Gastank beim Betrieb des Luftfahrzeugs den Strömungskörper beschädigt oder durch Trägheitskräfte aufgrund von Beschleunigungen des Luftfahrzeugs wiederholt mit einer inneren Begrenzungsfläche der betreffenden Innenzelle in Berührung gerät, ist eine Befestigung vorgesehen. Diese wird durch die Befestigungselemente realisiert, die an dem Gastank angeordnet sind. Die Befestigungselemente könnten direkt an der Gastankhülle angeordnet oder an Flanschen befestigt sein, die wiederum an der Gastankhülle angeordnet sind. Die Befestigungselemente sind mit Halteelementen in der betreffenden Innenzelle gekoppelt, sodass der Gastank daran gehaltert wird. Durch das Vorsehen eines ausreichenden Abstandes zu den Holmen und ggf. Rippen sowie den Hautabschnitten kann eine Berührung ausgeschlossen werden. Der Abstand unterstützt zudem eine thermische Isolierung, was besonders für gekühlte und insbesondere kryogene Medien in dem Gastank vorteilhaft ist. Aufgrund der üblicherweise räumlichen Bewegung des Strömungskörpers ist es sinnvoll, den betreffenden Gastank in allen drei Raumrichtungen zu stützen. Die Befestigung ist dabei derart auszulegen, dass die erwarteten bzw. zulassungsrelevanten Beschleunigungen berücksichtigt werden.

In einer vorteilhaften Ausführungsform ist der Gastank ein Druckgastank. Der Gastank kann folglich mit einem druckbeaufschlagten Gas befüllt werden. Der Gastank könnte einem herkömmlichen Druckgastank ähneln, der eine möglichst runde oder zumindest abgerundete Form aufweist. Die Gestaltungsmöglichkeit eines Drucktanks hängt jedoch von der Gestaltung der mindestens einen Innenzelle ab. Sind die Innenzellen beispielsweise eher schmal und länglich könnten sich röhrenförmige Drucktanks mit runden, stirnseitigen Endkappen anbieten.

Der Gastank ist dazu ausgebildet, flüssigen Wasserstoff zu lagern. Hierzu ist bevorzugt, dass der Gastank eine für die kryogene Lagerung von Wasserstoff ausreichende thermische Isolierung aufweist. Hierzu kann der Gastank eine Anordnung aus mehreren Gastankhüllen aufweisen, die gemeinsam einen Wärmeeintrag in den Gastank verzögern. Für die Realisierung einer solchen Isolierung kommen unterschiedliche Isolierschichten zwischen aufeinanderfolgenden Gastankhüllen in Betracht, welche unter anderem Vakuumisolierungen, Schäume und anderes umfassen.

Besonders bevorzugt weist der Strömungskörper mehrere Innenzellen auf, in denen mehrere voneinander unabhängige Gastanks angeordnet sind. Die Innenzellen sind, je nach Ausführung des Strömungskörpers, nicht beliebig groß und können daher nicht beliebig große Gastanks aufnehmen. Zur Bereitstellung einer mechanischen Festigkeit können innen mehrere Holme oder Rippen vorgesehen sein, die eine Unterteilung des von dem Torsionskasten umschlossenen Volumens durchführen. Sollte demnach Bedarf an einem größeren Gasvolumen oder einer größeren Gasmasse bestehen, als in einer der Innenzellen in einem Gastank unterbringbar ist, können folglich auch mehrere Innenzellen jeweils mit einem Gastank ausgestattet werden. Es ist nicht unbedingt notwendig, die Gastanks auf identische Weise zu realisieren. Sollten die Innenzellen unterschiedliche Abmessungen aufweisen, könnten auch hierauf abgestimmte Gastanks realisiert werden. Durch ein Leitungssystem mit Anschlussstücken, Ventilen, einem Verteiler oder ähnlichem können die mehreren Gastanks das darin enthaltene Gas an eine einzige Leitung liefern oder durch eine einzige Leitung befüllt werden.

Die Befestigungselemente sind an der Gastankhülle angeordnet oder damit gekoppelt, wobei die Befestigungselemente Zugelemente aufweisen, die mit den Halteelementen verbunden sind. Es ist vorstellbar, dass die Befestigungselemente an unterschiedlichen Abschnitten und unterschiedlichen Seiten eines Gastanks angeordnet sind, sodass eine stabile Halterung sowie eine gleichbleibende Ausrichtung des Gastanks ermöglicht wird. Die Halteelemente könnten an Versteifungsbauteilen, beispielsweise Holmen und/oder Rippen und/oder Hautabschnitten angeordnet sein. Aus Gründen der Festigkeit kann es sich anbieten, die Halteelemente in der Nähe von Kreuzungspunkten von Versteifungselementen anzuordnen. Da ein Gastank in einem Abstand zu allen Strukturkomponenten steht, die eine Innenzelle bilden, überbrücken Zugelemente den Abstand zwischen den Befestigungselementen und den Halteelementen.

Die Zugelemente weisen weiterhin Spannmittel auf, durch die alle mit einem Gastank gekoppelten Zugelemente straff gespannt sind und nicht durchhängen. Somit wird der Gastank straff in der jeweiligen Innenzelle aufgehängt. Durch diese Aufhängung können auch unterschiedliche Wärmedehnungen des Gastanks und der Versteifungselemente kompensiert werden.

In einer besonders vorteilhaften Ausführungsform sind die Zugelemente symmetrisch um mindestens eine Erstreckungsachse des Gastanks angeordnet. Eine solche Erstreckungsachse könnte beispielsweise eine Längsachse sein, um die herum die einzelnen Zugelemente symmetrisch angeordnet werden. Die Belastung der Zugelemente kann dann über alle Zugelemente gleichmäßig verteilt sein.

Der Gastank könnte eine längliche Form aufweisen, wobei eine Haupterstreckungsachse parallel oder winkelsymmetrisch zu Längsversteifungselementen verläuft, die an den Hautabschnitten angeordnet sind. Eine Innenzelle könnte beispielsweise zwei voneinander beabstandete Holme oder zwei voneinander beabstandete Rippen aufweisen, zwischen denen der betreffende Gastank mit seiner Längsachse verläuft. Verlaufen die beiden Längsversteifungselemente parallel zueinander, könnte auch die Haupterstreckungsachse des Gastanks parallel hierzu verlaufen. Schließen die beiden Längsversteifungselemente einen Winkel zueinander ein, könnte die Haupterstreckungsachse zu jedem Längsversteifungselement denselben Winkelbetrag einschließen.

Besonders bevorzugt wird die mindestens eine Innenzelle zumindest von zwei voneinander beabstandeten Holmen und den Hautabschnitten begrenzt. Folglich können mehrere Innenzellen jeweils von voneinander beabstandeten Holmen begrenzt sein, zwischen denen sich ein Gastank erstreckt.

Es ist vorteilhaft, wenn der Gastank erste Befestigungselemente und zweite Befestigungselement aufweist, die mit Halteelementen in der betreffenden Innenzelle gekoppelt sind, wobei die ersten Befestigungselemente und die zweiten Befestigungselemente an zwei voneinander beabstandeten Abschnitten des Gastanks angebracht und zum Stützen in unterschiedliche Raumrichtungen ausgebildet sind.

Hiermit könnte beispielsweise eine Längs- und Querbeschleunigung des Luftfahrzeugs, an dem der Strömungskörper angeordnet ist, mit dedizierten ersten Befestigungselementen abgefangen werden. Vertikalbeschleunigungen könnten indes durch zweite Befestigungselemente aufgenommen werden. Die Vertikalbeschleunigung könnte mittig an dem Gastank abgefangen werden, während die Längs- und Querbeschleunigungen an einander gegenüberliegenden Endabschnitten abgefangen werden könnten. Es sind jedoch auch andere Varianten denkbar, bei denen die Befestigungselemente umgekehrt hierzu angeordnet sind oder bei denen andere Kombinationen von Beschleunigungsanteilen berücksichtigt werden.

Der Torsionskasten kann zwei, drei oder mehr ebene Kastenabschnitte aufweisen, die aneinandergereiht den Torsionskasten bilden, wobei in den Kastenabschnitten jeweils mehrere Innenzellen gebildet sind, wobei in jedem Kastenabschnitt mindestens eine Gruppen von Gastanks in den betreffenden Innenzellen angeordnet sind. Folglich könnten mehrere Ebenen von mehreren Gastanks nebeneinander in einem Torsionskasten angeordnet sein, um eine größere Anordnung von Gastanks zu schaffen. Hiermit könnten größere, komplexere Torsionskästen von größeren Strömungskörpern sinnvoll ausgefüllt werden.

Der Strömungskörper könnte ein Seitenleitwerk oder ein Höhenleitwerk eines Flugzeugs sein. Insbesondere das Seitenleitwerk kann sich für das erfindungsgemäße Konzept anbieten, da dort mehrere hohle Innenzellen vorzufinden sind, die durch Ausstattung mit Gastanks sinnvoll genutzt werden können.

Die Erfindung betrifft ferner ein Luftfahrzeug, aufweisend mindestens einen Strömungskörper nach der vorhergehenden Beschreibung.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt einen Strömungskörper als Seitenleitwerk in einer teilgeschnittenen Seitenansicht.
Fig. 2 zeigt eine Vergrößerung der Ansicht aus Fig. 1.
Fig. 3 zeigt eine Draufsicht auf einen Gastank in einer Innenzelle.
Fig. 4 zeigt zwei Gastanks in zwei benachbarten Innenzellen.
Fig. 5 zeigt eine Vorderansicht eines Gastanks in einer Innenzelle.
Fig. 6 zeigt ein Luftfahrzeug mit einem erfindungsgemäß gestalteten Seitenleitwerk.

### DETAILLIERTE DARSTELLUNG EXEMPLARISCHER AUSFÜHRUNGSFORMEN

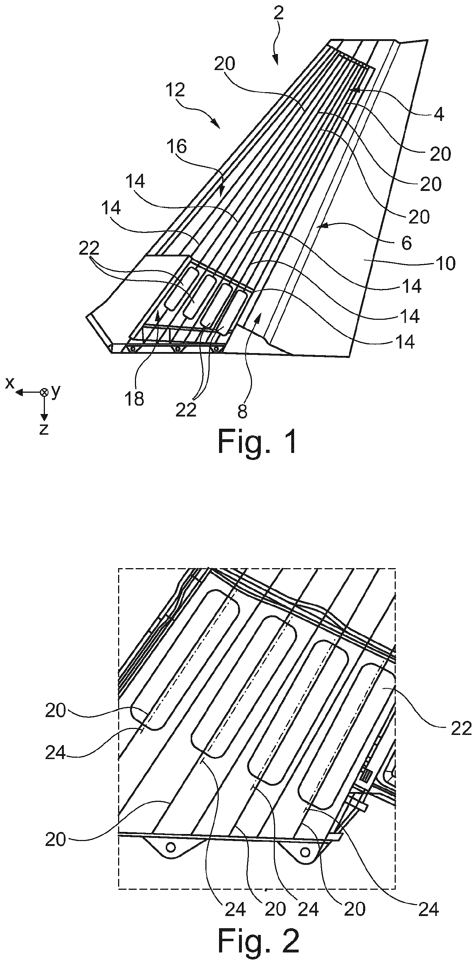

Fig. 1 zeigt einen Strömungskörper in Form eines Seitenleitwerks 2. Zur Orientierung ist ein Koordinatensystem dargestellt, das eine Längsachse X, eine Querachse Y und eine Hochachse Z eines Luftfahrzeugs, an dem das Seitenleitwerk 2 angeordnet ist, zeigt.

Ein Torsionskasten 4 ist ein zentraler, Lasten aufnehmender Bestandteil des Strömungskörpers 2. An der Hinterkante 6 des Strömungskörpers 2 ist ein Scharnier 8 angeordnet, mit dem ein Seitenruder 10 bewegbar gelagert ist. An einer gegenüberliegenden Seite ist eine Vorderkante 12 vorgesehen. Der Torsionskasten 4 weist mehrere Holme 14 auf, die sich zwischen der Vorderkante 12 und der Hinterkante 6 mit einem sich nach oben verringernden Abstand erstrecken. Auf den Holmen 14 sind ein erster Hautabschnitt 16 (in der Zeichnungsebene durch die Holme 14 teilweise verdeckt) und einen zweiten Hautabschnitt (in dieser Ansicht weggelassen) angeordnet, die den Torsionskasten 4 schließen. Dadurch entstehen mehrere Innenzellen 18. Es ist vorstellbar, dass die Innenzellen 18 gegebenenfalls stellenweise durch Rippen (hier nicht dargestellt) unterteilt werden. An den Hauptabschnitten 16 sind zudem Längsversteifungselemente in Form von Stringern 20 angeordnet.

An einem unteren Ende des Strömungskörpers 2 sind vier Gastanks 22 ersichtlich, die in separaten Innenzellen 18 angeordnet und dazu ausgebildet sind, ein Gas zu speichern. Dies kann insbesondere Wasserstoff sein. Die Gastanks 22 können beispielhaft dazu ausgebildet sein, flüssigen Wasserstoff kryogen zu lagern.

Fig. 2 zeigt die Anordnung der Gastanks 22 in einer vergrößerten Darstellung. Er ist ersichtlich, dass die Gastanks 22 länglich bzw. röhrenförmig sind und abgerundete Endkappen aufweisen. Sie besitzen jeweils eine Haupterstreckungsachse 24, die eine Längsachse darstellen kann, welche weitgehend parallel zu den Stringern 20 verlaufen.

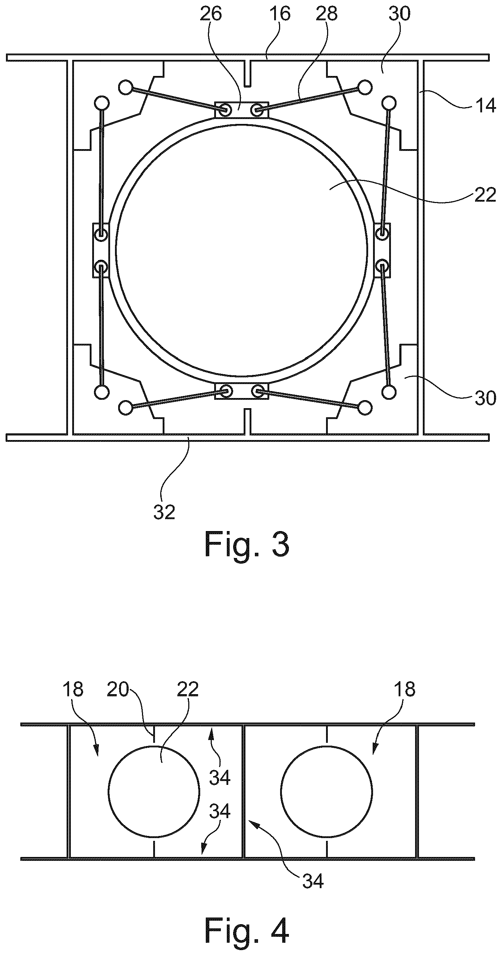

Fig. 3 zeigt eine Draufsicht eine zu der Erstreckungsachse 24 senkrechte Ebene eines Gastanks 22. Der Gastank 22 weist Befestigungselemente 26 auf, die über Zugelemente 28 mit Halteelementen 30 gekoppelt sind. Wie weiter nachfolgend erläutert wird, werden diese Befestigungselemente 26 auch als zweite Befestigungselemente bezeichnet. Die Halteelemente 30 sind an Kreuzungspunkten zwischen Holmen 14 und dem ersten Hautabschnitt 16 bzw. einem gegenüberliegend angeordneten zweiten Hautabschnitt 32 positioniert und dort mit den Holmen 14 und den Hautabschnitten 16 und 32 verbunden.

Die Zugelemente 28 sind dazu ausgebildet, den Gastank 22 an den Halteelementen 30 zu verspannen. Hierfür sind beispielhaft vier zweite Befestigungselemente 26 regelmäßig und symmetrisch um die Längserstreckungsachse 24 herum entlang des Umfangs des Gastanks 22 verteilt. Die Zugelemente 28 können ferner durch Auswahl eines geeigneten Materials und eines entsprechenden Dehnverhaltens dazu ausgebildet sein, eine Dämpfungswirkung zu erzielen.

Mehrere Gastanks 22 in benachbarten Innenzellen 18 sind in Fig. 4 dargestellt. Hier ist ersichtlich, dass die Gastanks 22 einen bestimmten Abstand zu Innenflächen 34 der Innenzelle 18 aufweisen. Dadurch können Beschädigungen durch Anschlagen der Gastanks 22 an die Innenflächen 34 verhindert werden. Gleichzeitig könnte insbesondere bei der Verwendung kryogener Gastanks 22 ein Wärmeeintrag in die Gastanks 22 reduziert werden.

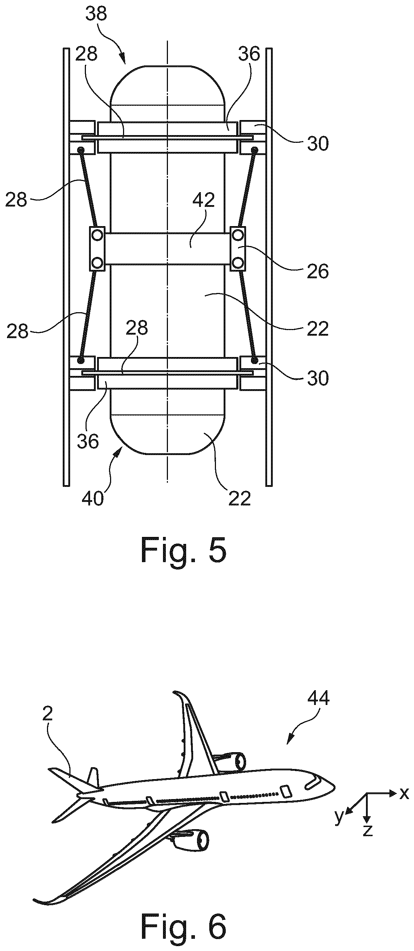

Fig. 5 stellt den Gastank 22 in einer Vorderansicht etwa senkrecht zu einem Holm 14 dar. Hier sind erste Befestigungselemente 36 ersichtlich, die durch die Zugelemente 28 mit den Halteelementen 30 gekoppelt sind und eine Fixierung des Gastanks 22 im Wesentlichen in X- und Y-Richtung durchführen. Die ersten Befestigungselemente 36 finden sich sowohl an einem oberen ersten Endabschnitt 38 des Gastanks 22, als auch an einem unteren zweiten Endabschnitt 40 des Gastanks 22. Sie sind beispielhaft ringförmig ausgebildet und können Ösen, Flansche oder andere Mittel aufweisen, um eine Befestigung der Zugelemente 28 zu erlauben. Analog dazu sind die Halteelemente 30 seitlich benachbart zu den ersten Befestigungselementen 36 angeordnet. Die zweiten Befestigungselemente 26 sind mittig zwischen dem ersten Endabschnitt 38 und dem zweiten Endabschnitt 40 angeordnet und ebenso über Zugelemente 28 mit den Halteelementen 30 verspannt. Sie können ebenfalls eine ringförmige Struktur 42 aufweisen, über die sie mit dem Gastank 22 verbunden sind. Hierüber kann insbesondere eine Fixierung in der z-Richtung erfolgen.

Schließlich zeigt Fig. 6 ein Luftfahrzeug 44, das ein Seitenleitwerk 2 aufweist, das nach den vorangehend dargestellten Prinzipien ausgestaltet ist.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Strömungskörper / Seitenleitwerk
- 4: Torsionskasten
- 6: Hinterkante
- 8: Scharnier
- 10: Seitenruder
- 12: Vorderkante
- 14: Holm
- 16: erster Hautabschnitt
- 18: Innenzelle
- 20: Stringer
- 22: Gastank
- 24: Haupterstreckungsachse
- 26: zweites Befestigungselement
- 28: Zugelement
- 30: Halteelement
- 32: zweiter Hautabschnitt
- 34: Innenfläche
- 36: erstes Befestigungselement
- 38: erster Endabschnitt
- 40: zweiter Endabschnitt
- 42: ringförmige Struktur
- 44: Luftfahrzeug

## Patentansprüche

1. Strömungskörper (2) für ein Luftfahrzeug (44), aufweisend
einen Torsionskasten(4) mit
mehreren Holmen (14) und
mindestens zwei Hautabschnitten (16, 32) zum Umhüllen der Holme (14),
wobei in dem Torsionskasten (4) mindestens eine Innenzelle (18) ausgebildet ist,
wobei in der mindestens einen Innenzelle (18) ein Gastank (22) mit einer Gastankhülle angeordnet ist, und
der Gastank (22) Befestigungselemente (26, 36) aufweist, die mit Halteelementen (30) in der betreffenden Innenzelle (18) gekoppelt sind, um den Gastank (22) derart zu haltern, wobei die Gastankhülle in einem Abstand zu den Holmen (14) und den Hautabschnitten (16, 32) gelagert und in drei Raumrichtungen gestützt ist, und
dass der Gastank (22) dazu ausgebildet ist, flüssigen Wasserstoff zu lagern,
wobei
die Befestigungselemente (26, 36) an der Gastankhülle angeordnet oder damit gekoppelt sind, und
die Befestigungselemente (26, 36) Zugelemente (28) aufweisen, die mit den Halteelementen (30) verbunden sind, wobei die Zugelemente (28) Spannmittel aufweisen, durch die die Zugelemente (28) straff gespannt sind, und
wobei dass die Halteelemente (30) an Kreuzungspunkten zwischen den Holmen (14) und einem ersten Hautabschnitt (16) bzw. einem gegenüberliegend angeordneten zweiten Hautabschnitt (32) positioniert und dort mit den Holmen (14) und den Hautabschnitten (16, 32) verbunden sind.

2. Strömungskörper (2) nach Anspruch 1,
**dadurch gekennzeichnet, dass** der Gastank (22) ein Druckgastank ist.

3. Strömungskörper (2) nach Anspruch 1 oder 2,
**dadurch gekennzeichnet, dass** der Strömungskörper (2) mehrere Innenzellen (18) aufweist, in denen mehrere voneinander unabhängige Gastanks (22) angeordnet sind.

4. Strömungskörper (2) nach einem der vorhergehenden Ansprüche,
**dadurch gekennzeichnet, dass** die die Zugelemente (28) symmetrisch um mindestens eine Erstreckungsachse des Gastanks (22) angeordnet sind

5. Strömungskörper (2) nach einem der vorhergehenden Ansprüche,
**dadurch gekennzeichnet, dass** der Gastank (22) eine längliche Form aufweist, wobei eine Haupterstreckungsachse (24) parallel oder winkelsymmetrisch zu Längsversteifungselementen (20) verläuft, die an den Hautabschnitten (16, 32) angeordnet sind.

6. Strömungskörper (2) nach einem der vorhergehenden Ansprüche,
**dadurch gekennzeichnet, dass** die mindestens eine Innenzelle (18) zumindest von zwei voneinander beabstandeten Holmen (14) und den Hautabschnitten (16, 32) begrenzt wird.

7. Strömungskörper (2) nach einem der vorhergehenden Ansprüche,
**dadurch gekennzeichnet, dass** der Gastank (22) erste Befestigungselemente (36) und zweite Befestigungselemente (26) aufweist, die mit Halteelementen (30) in der betreffenden Innenzelle (18) gekoppelt sind,
wobei die ersten Befestigungselemente (36) und die zweiten Befestigungselemente (26) an zwei voneinander beabstandeten Längsabschnitten (38, 40) des Gastanks (22) angebracht sind und zum Stützen in unterschiedliche Raumrichtungen ausgebildet sind.

8. Strömungskörper (2) nach einem der vorhergehenden Ansprüche,
**dadurch gekennzeichnet, dass** der Torsionskasten (4) zwei, drei oder mehr ebene Kastenabschnitte aufweist, die aneinandergereiht den Torsionskasten (4) bilden, wobei in den Kastenabschnitten jeweils mehrere Innenzellen (18) gebildet sind, wobei in jedem Kastenabschnitt mindestens eine Gruppen von Gastanks (22) in den betreffenden Innenzellen (18) angeordnet sind.

9. Strömungskörper (2) nach einem der vorhergehenden Ansprüche,
**dadurch gekennzeichnet, dass** der Strömungskörper (2) ein Seitenleitwerk oder ein Höhenleitwerk eines Flugzeugs (44) ist.

10. Luftfahrzeug (44), aufweisend mindestens einen Strömungskörper (2) nach einem der vorhergehenden Ansprüche.

## Claims

1. Flow body (2) for an aircraft (44), comprising
a torsion box (4) with
a plurality of spars (14) and
at least two skin portions (16, 32) for enveloping
the spars (14),
wherein at least one inner cell (18) is formed in the torsion box (4), wherein a gas tank (22) with a gas tank shell is arranged in the at least one inner cell (18), and
the gas tank (22) comprises fastening elements (26, 36) coupled to retaining elements (30) in the relevant inner cell (18) in order to hold the gas tank (22) such that the gas tank shell is supported at a distance from the spars (14) and the skin portions (16, 32) and is supported in three spatial directions, and the gas tank (22) is designed to store liquid hydrogen, wherein the fastening elements (26, 36) are arranged on or coupled to the gas tank shell, and
the fastening elements (26, 36) comprise tension elements (28) which are connected to the retaining elements (30), wherein the tension elements (28) comprise bracing means by which the tension elements (28) are firmly braced, and wherein the retaining elements (30) are positioned at intersections between the spars (14) and a first skin portion (16) or an oppositely disposed second skin portion (32), where they are connected to the spars (14) and the skin portions (16, 32).

2. Flow body (2) according to Claim 1,
**characterized in that** the gas tank (22) is a pressurized gas tank.

3. Flow body (2) according to Claim 1 or 2, **characterized in that** the flow body (2) has a plurality of inner cells (18) in which a plurality of independent gas tanks (22) are arranged.

4. Flow body (2) according to one of the preceding claims,
**characterized in that** the tension elements (28) are arranged symmetrically about at least one extension axis of the gas tank (22).

5. Flow body (2) according to one of the preceding claims,
**characterized in that** the gas tank (22) has an elongate shape, wherein a main extension axis (24) runs parallel or angularly symmetrically to longitudinal stiffening elements (20) arranged at the skin portions (16, 32).

6. Flow body (2) according to one of the preceding claims,
**characterized in that** the at least one inner cell (18) is bounded at least by two spaced-apart spars (14) and the skin portions (16, 32).

7. Flow body (2) according to one of the preceding claims,
**characterized in that** the gas tank (22) comprises first fastening elements (36) and second fastening elements (26) coupled to retaining elements (30) in the relevant inner cell (18),
wherein the first fastening elements (36) and the second fastening elements (26) are attached to two spaced-apart longitudinal portions (38, 40) of the gas tank (22) and are designed to be supported in different spatial directions.

8. Flow body (2) according to one of the preceding claims,
**characterized in that** the torsion box (4) comprises two, three or more planar box portions forming the torsion box (4) when arranged adjacently in a row, wherein a plurality of inner cells (18) are formed in each of the box portions, wherein at least one group of gas tanks (22) are arranged in the relevant inner cells (18) in each box portion.

9. Flow body (2) according to one of the preceding claims,
**characterized in that** the flow body (2) is a vertical stabilizer or a horizontal stabilizer of an aircraft (44) .

10. Aircraft (44) comprising at least one flow body (2) according to one of the preceding claims.

## Revendications

1. Corps d'écoulement (2) pour un aéronef (44), présentant
une boîte de torsion (4) avec
plusieurs montants (14)
et
au moins deux sections de peau (16, 32) pour envelopper les montants (14),
au moins une cellule intérieure (18) étant réalisée dans la boîte de torsion (4),
un réservoir de gaz (22) avec une enveloppe de réservoir de gaz étant agencé dans l'au moins une cellule intérieure (18), et
le réservoir de gaz (22) présentant des éléments de fixation (26, 36) qui sont couplés à des éléments de retenue (30) dans la cellule intérieure concernée (18) afin de retenir le réservoir de gaz (22),
l'enveloppe de réservoir de gaz étant supportée à une distance des montants (14) et des sections de peau (16, 32) et étant soutenue dans trois directions spatiales, et
le réservoir de gaz (22) étant réalisé pour stocker de l'hydrogène liquide,
les éléments de fixation (26, 36) étant agencés sur l'enveloppe de réservoir de gaz ou couplés à celle-ci, et
les éléments de fixation (26, 36) présentant des éléments de traction (28) qui sont reliés aux éléments de retenue (30), les éléments de traction (28) présentant des moyens de tension par lesquels les éléments de traction (28) sont tendus, et
les éléments de retenue (30) étant positionnés aux points d'intersection entre les montants (14) et une première sections de peau (16) ou une deuxième section de peau (32) agencée en face et y étant reliés aux montants (14) et aux sections de peau (16, 32).

2. Corps d'écoulement (2) selon la revendication 1,
**caractérisé en ce que** le réservoir de gaz (22) est un réservoir de gaz sous pression.

3. Corps d'écoulement (2) selon la revendication 1 ou 2,
**caractérisé en ce que** le corps d'écoulement (2) présente plusieurs cellules intérieures (18) dans lesquelles sont agencés plusieurs réservoirs de gaz (22) indépendants les uns des autres.

4. Corps d'écoulement (2) selon l'une quelconque des revendications précédentes,
**caractérisé en ce que** les éléments de traction (28) sont agencés symétriquement autour d'au moins un axe d'extension du réservoir de gaz (22).

5. Corps d'écoulement (2) selon l'une quelconque des revendications précédentes,
**caractérisé en ce que** le réservoir de gaz (22) présente une forme allongée, un axe d'extension principal (24) s'étendant de manière parallèle ou symétrique angulairement à des éléments de renfort longitudinaux (20) agencés sur les sections de peau (16, 32).

6. Corps d'écoulement (2) selon l'une quelconque des revendications précédentes,
**caractérisé en ce que** l'au moins une cellule intérieure (18) est délimitée par au moins deux montants (14) espacés l'un de l'autre et par les sections de peau (16, 32) .

7. Corps d'écoulement (2) selon l'une quelconque des revendications précédentes,
**caractérisé en ce que** le réservoir de gaz (22) présente des premiers éléments de fixation (36) et des deuxièmes éléments de fixation (26) couplés à des éléments de retenue (30) dans la cellule intérieure concernée (18),
les premiers éléments de fixation (36) et les deuxièmes éléments de fixation (26) étant disposés sur deux sections longitudinales espacées l'une de l'autre (38, 40) du réservoir de gaz (22) et étant réalisés pour être soutenus dans des directions spatiales différentes.

8. Corps d'écoulement (2) selon l'une quelconque des revendications précédentes,
**caractérisé en ce que** la boîte de torsion (4) présente deux, trois sections de boîte planes ou plus qui, alignées, forment la boîte de torsion (4), plusieurs cellules intérieures (18) étant formées respectivement dans les sections de boîte, au moins un groupe de réservoirs de gaz (22) étant agencé dans les cellules intérieures concernées (18) dans chaque section de boîte.

9. Corps d'écoulement (2) selon l'une quelconque des revendications précédentes,
**caractérisé en ce que** le corps d'écoulement (2) est un empennage vertical ou un empennage horizontal d'un aéronef (44).

10. Aéronef (44), présentant au moins un corps d'écoulement (2) selon l'une quelconque des revendications précédentes.
